Europäisches Patentamt

European Patent Office

Office européen des brevets

(19)

(11) Veröffentlichungsnummer: **0 066 664**
A1

(12) ## EUROPÄISCHE PATENTANMELDUNG

(21) Anmeldenummer: **82100062.7**

(22) Anmeldetag: **07.01.82**

(51) Int. Cl.³: **G 06 F 1/00,** G 09 G 1/00

(30) Priorität: **14.05.81 DE 3119209**

(43) Veröffentlichungstag der Anmeldung: **15.12.82**
**Patentblatt 82/50**

(84) Benannte Vertragsstaaten: **AT DE FR GB IT NL**

(71) Anmelder: **ROBERT BOSCH GMBH, Postfach 50,
D-7000 Stuttgart 1 (DE)**

(72) Erfinder: **Mack, Hartmut, Pössnecker Strasse 18,
D-1000 Berlin 45 (DE)**

(74) Vertreter: **Schmidt, Hans-Ekhardt, Robert Bosch GmbH
Geschäftsbereich Elektronik Patent- und
Lizenzabteilung Forckenbeckstrasse 9-13,
D-1000 Berlin 33 (DE)**

(54) **Tragbares mobiles Datenterminal.**

(57) Es wird ein tragbares mobiles Datenterminal vorgeschlagen, das zur Eingabe und zum Anzeigen von Informationen dient. Das Datenterminal umfaßt zwei Einzelgehäuse
(11, 12), die über mechanische und elektrische Verbindungsmittel (13, 14) buchartig miteinander verbunden sind.
Ein Einzelgehäuse (11) trägt eine Tastaturvorrichtung (16)
und das andere Einzelgehäuse (12) eine Anzeigevorrichtung (40). Die äußere Form der Einzelgehäuse ist so beschaffen, daß die Einzelgehäuse im zusammengeklappten
Zustand ein geschlossenes Gehäuse ergeben, das mittels
eines Schlosses gegen unbefugte Benutzung gesichert werden kann.

EP 0 066 664 A1

ACTORUM AG

11/81
EK/PLI Scht/Li
13. Mai 1981


ROBERT BOSCH GMBH, 7OOO Stuttgart 1


Tragbares mobiles Datenterminal


Stand der Technik

Die Erfindung geht aus von einem tragbaren mobilen
Datenterminal nach der Gattung des Hauptanspruchs.

Es ist schon ein tragbares mobiles Datenterminal
bekannt (NTZ, 1980, Heft 11, Seite 737), das ein
flaches, pultartiges Gehäuse aufweist. Ein waagerechter Teil des einstückigen Gehäuses nimmt eine
Tastaturvorrichtung und ein nach oben keilförmig
ansteigender Teil eine Anzeigevorrichtung auf, die
mittels eines schwenkbar mit dem Gehäuse verbundenen
Blendschutzdeckels gegen Blendwirkung geschützt ist.
Wird das bekannte Datenterminal transportiert, so
liegt die Tastaturfläche ungeschützt; es sei denn,
daß das komplette Terminal in einem Koffer oder in
einer Tasche untergebracht wird. Außerdem nimmt bei
dem bekannten Datenterminal die Displayfläche einen
bestimmten, unveränderbaren Winkel zu der Grundfläche
bzw. zu der Tastaturfläche ein, so daß das Ablesen
des Displays unter gewissen Umständen, beispielsweise
bei der Unterbringung oberhalb oder unterhalb eines
Armaturenbrettes eines Kraftfahrzeuges, Schwierigkeiten bereiten kann.

11/81                    - 2 -

## Vorteile der Erfindung

Das erfindungsgemäße tragbare mobile Datenterminal mit
den kennzeichnenden Merkmalen des Hauptanspruchs hat den
Vorteil, daß das Gehäuse wie ein Buch zusammenklappbar
ist, so daß Display und Tastatur automatisch geschützt
sind. Als weiterer Vorteil ist anzusehen, daß das
Display jede beliebige Winkellage zu der Grundfläche einnehmen kann, wodurch eine optimale Ablesbarkeit in jeder
Lage des Datenterminals gewährleistet ist und auf einen
zusätzlichen Blendschutz verzichtet werden kann.

Durch die in den Unteransprüchen aufgeführten Maßnahmen
sind vorteilhafte Weiterbildungen und Verbesserungen des
im Hauptanspruch angegebenen Datenterminals möglich.
Besonders vorteilhaft ist ein Ausführungsbeispiel des
Datenterminals, bei dem die zwischen den Einzelgehäusen
erforderlichen mechanischen und elektrischen Verbindungsmittel an den beiden Endbereichen der aneinandergrenzenden Stirnseiten der Einzelgehäuse vorgesehen sind.
Dadurch wird eine mechanisch und elektrisch stabile Verbindung zwischen den beiden Einzelgehäusen geschaffen,
die wenig Platz beansprucht.

## Zeichnung

Ein Ausführungsbeispiel der Erfindung ist in der Zeichnung
anhand mehrerer Figuren dargestellt und in der nachfolgenden Beschreibung näher erläutert. Die Zeichnung zeigt in

Fig. 1    eine perspektivische Ansicht des erfindungsgemäßen
          Datenterminals in der Betriebslage,

Fig. 2    eine perspektivische Ansicht des erfindungsgemäßen
          Datenterminals in zusammengeklapptem Zustand,

0066664

Fig. 3   eine Ansicht der mechanischen und elektrischen
         Verbindungsmittel bei zusammengeklappten
         Einzelgehäusen und

Fig. 4   eine Ansicht der mechanischen und elektrischen
         Verbindungsmittel bei aufgeklappten Einzelgehäusen.


## Beschreibung der Erfindung

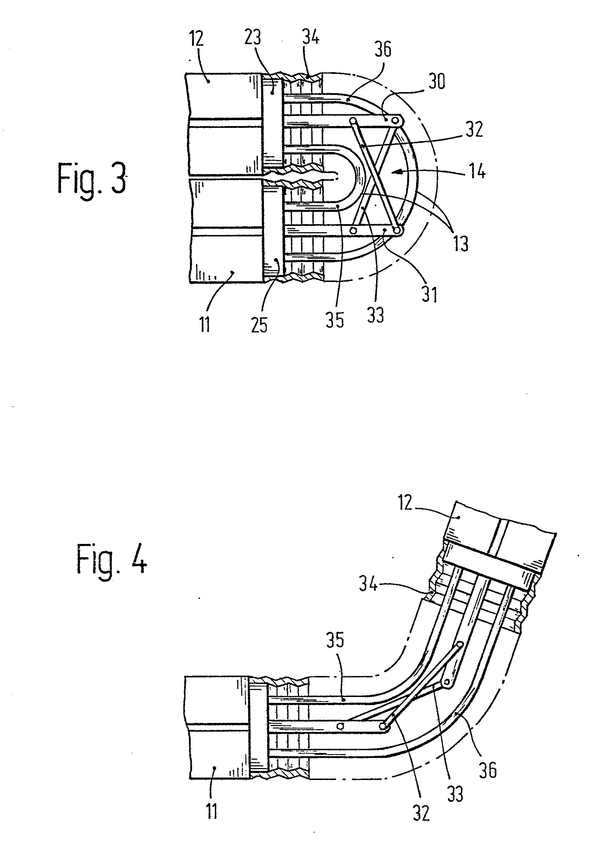

Ein erfindungsgemäßes tragbares mobiles Datenterminal 10
hat ein Gehäuse aus zwei im wesentlichen quaderförmigen
flachen Einzelgehäusen 11 und 12, die durch elektrische
und mechanische Verbindungsmittel 13 und 14 (Fig. 3, 4)
buchartig klappbar verbunden sind.

Das erste Einzelgehäuse 11 trägt auf seiner großflächigen
Frontseite 15 eine Tastaturvorrichtung 16, das ist zum
Beispiel eine unter der Bezeichnung ASCII-Tastatur
bekannte Vorrichtung mit Tasten zum Eingeben von Daten
und/oder Buchstaben, die durch Sondertasten zum Eingeben
von Befehlen ergänzt ist. Die Tastaturvorrichtung 16 hat
eine pultförmige Gestalt, das heißt, ihre Ebene schließt
einen Winkel $\alpha$ von zum Beispiel $10^{\circ}$ zu der Ebene der
Grundfläche ein. An der vorderen Stirnseite 18 des ersten
Einzelgehäuses 11 befinden sich eine Aufnahmeöffnung 19
für einen Kodierstecker 20 sowie ein Ein-/Ausschalter 21.
An der hinteren Stirnseite 22 des Einzelgehäuses 11 sind
Anschlußmittel vorgesehen, die zum Anschließen einer
Stromversorgung für die in dem Datenterminal enthaltene
elektronische Schaltung dienen. Zu den Anschlußmitteln
kann auch ein Anschluß für ein Funksende- und -empfangsgerät
gehören, mit dem die in die Tastaturvorrichtung des Datenterminals eingegebenen Informationen per Funk ausgesendet
bzw. die von einer anderen Funkstation ausgesendeten
Informationen empfangen und an das Datenterminal weitergeleitet werden.

An den beiden Endbereichen der hinteren Stirnseite 22
des ersten Einzelgehäuses 11 geht das Einzelgehäuse in
je einen in Richtung der schmalen Stirnseite des Einzelgehäuses liegenden Stutzen 23 über. Gleichartige
Stutzen 25 sind auch an der entsprechenden Stirnwand 26
des Einzelgehäuses 12 vorhanden.

Beide Einzelgehäuse 11 und 12 werden durch die mechanischen Verbindungsmittel 14 (Fig. 3 und 4) miteinander
verbunden. Jedes mechanische Verbindungsmittel setzt
sich aus folgenden Einzelteilen zusammen. Jeder Stutzen
23 und 25 enthält einen mit dem betreffenden Einzelgehäuse fest oder lösbar verbundenen koaxialen Stab 30
und 31. Durch die Lösbarkeit der koaxialen Stäbe und
der elektrischen Verbindungen ist auch ein abgesetzter
Betrieb der beiden Einzelgehäuse 11 und 12 möglich.
Beide Stäbe sind durch zwei in zusammengeklapptem
Zustand des Gehäuses über Kreuz liegende und mit ihren
Enden an den Stäben drehbeweglich gelagerte gleich lange
Stangen 32 und 33 miteinander verbunden. Bei dieser Art
eines Kreuzgelenks ist sichergestellt, daß das mechanische Verbindungselement beim Auf- oder Zuklappen des
Gehäuses keine radialen Kräfte auf einen biegsamen
Schlauch 34 ausübt, der mit seinen Enden auf die sich
gegenüberliegenden Stutzen aufgesteckt ist. Innerhalb
des vorzugsweise als Balg ausgebildeten Schlauchs 34
befinden sich noch die elektrischen Verbindungsmittel 13
in Form von zwei Kabeln 35 und 36. Im aufgeklappten
Zustand des Gehäuses liegen die Stäbe 30 und 31 auf einer
gemeinsamen Achse. Die beschriebenen mechanischen Verbindungsmittel können durch Rastmittel ergänzt sein, die
eine Rastung bei bestimmten Winkellagen des zweiten Einzelgehäuses 12 ergeben.

Das zweite Einzelgehäuse 12 enthält eine Anzeigevorrichtung 40 in Form eines großflächigen LED- oder
LCD-Displays 41, eines akustischen Meldeelements 42
und mehrerer optischer Anzeigeelemente 43 und 44,
die oberhalb des Displays in einer Reihe angeordnet
sind. Mit den Anzeigeelementen 43 werden beispielsweise Funktionen des Funksende- und -empfangsgerätes
und mit den Anzeigeelementen 44 Funktionen angezeigt,
die sich auf die Informationseingabe beziehen. Das
akustische Meldeelement 42 und die optischen Anzeigeelemente 43 und 44 können auch an anderen Stellen des
zweiten Einzelgehäuses 12 untergebracht sein. In dem
ersten und/oder zweiten Einzelgehäuse 11 und 12 kann
auch ein Mikrofon, ein Lautsprecher oder ein kombinierter Mikrofon/Lautsprecher für den Sprechfunkbetrieb
vorhanden sein.

Um eine universelle Anwendbarkeit des Datenterminals
realisieren zu können, sind die Tastaturvorrichtung 16
und die Anzeigevorrichtung 40 lösbar mit den entsprechenden Einzelgehäusen verbunden. Zu diesem Zweck enthalten die Einzelgehäuse der Tastaturvorrichtung 16
und der Anzeigevorrichtung 40 angepaßte, mit Kontaktelementen versehene Vertiefungen, in die die mit entsprechenden Gegenkontaktelementen ausgerüsteten Vorrichtungen eingesteckt werden können. Somit läßt sich
das Datenterminal ohne Schwierigkeiten für jeden einzelnen Anwendungsfall mit der erforderlichen Tastaturvorrichtung und Anzeigevorrichtung versehen.

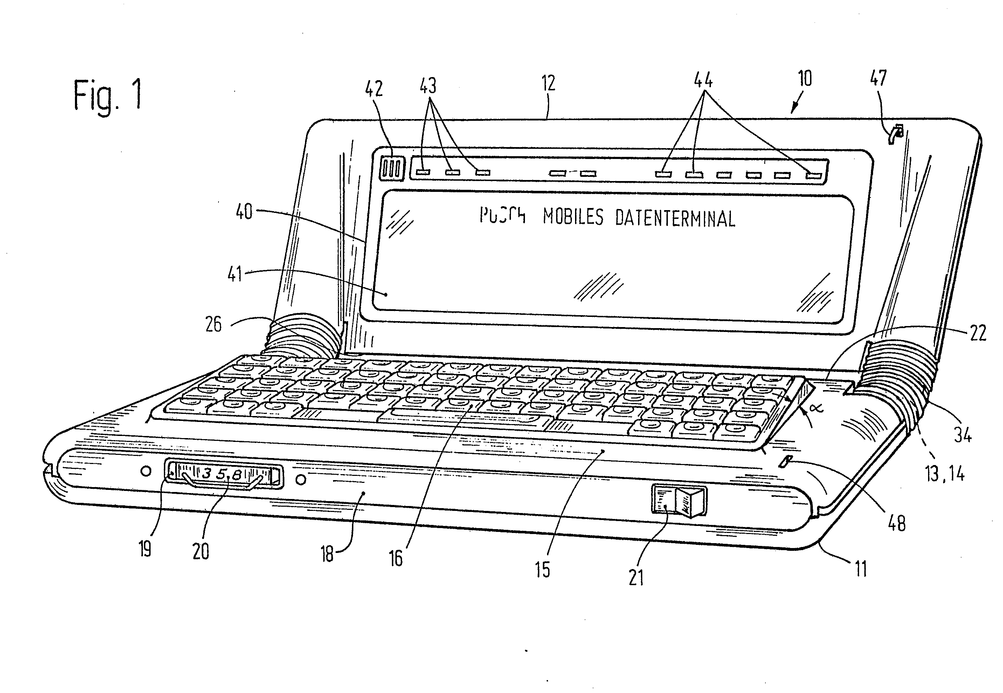

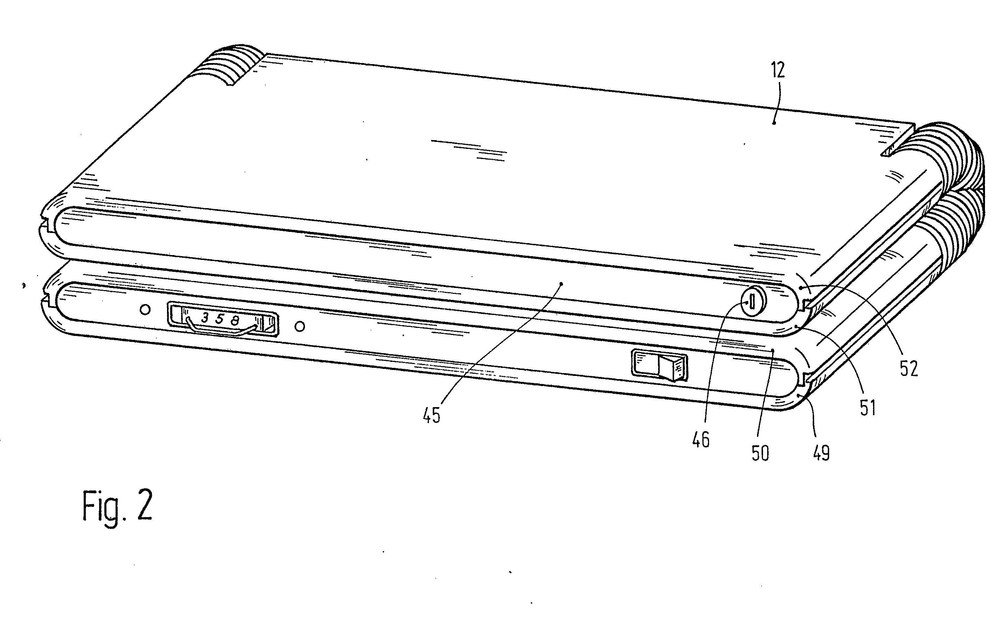

An der vorderen Stirnseite 45 des zweiten Einzelgehäuses 12 (vgl. Fig. 2) ist auf der rechten Seite
ein Schloß 46 vorgesehen, mit dem das zusammengeklappte Gehäuse gegen unberechtigte Benutzung gesichert werden kann. Bei zugeklapptem und abgeschlossenem Gehäuse greift ein Riegel 47 (Fig. 1) in eine Öffnung 48 in dem ersten Einzelgehäuse 11 ein.

Damit das Datenterminal allen Anforderungen an die passive Sicherheit in Kraftfahrzeugen genügt, sind unter anderem alle Ecken und Kanten der Einzelgehäuse 11 und 12 abgerundet. Jedes Einzelgehäuse besteht aus zwei zusammengefügten Halbschalen 49 und 50 bzw. 51 und 52 (Fig. 2), die aus einem zumindest an der Oberfläche elastischen Kunststoff, vorzugsweise aus einem Polyurethanschaum, hergestellt sind. Ein weiterer Vorzug im Hinblick auf die passive Sicherheit besteht darin, daß das zweite Einzelgehäuse 12 bei einem Aufprall dem Stoß nachgibt und nach vorn oder hinten wegklappt.

Das zweite Einzelgehäuse 12 ist im übrigen zu seiner unteren Stirnwand 26 hin etwas verjüngt, so daß die Einzelgehäuse trotz der schräg angeordneten Tastaturvorrichtung 16 zusammengeklappt werden können und ein vollständig geschlossenes Gehäuse ergeben.

11/81
EK/PLI Scht/Li
13. Mai 1981


ROBERT BOSCH GMBH, 7000 Stuttgart 1


Ansprüche


1. Tragbares mobiles Datenterminal mit einem Gehäuse, das eine Tastaturvorrichtung, eine Anzeigevorrichtung, eine elektronische Schaltung, eine Anschlußvorrichtung sowie elektrische Verbindungsmittel zum Verbinden der genannten Vorrichtungen mit der Schaltung enthält, dadurch gekennzeichnet, daß das Gehäuse aus zwei im wesentlichen quaderförmigen, durch mechanische und elektrische Verbindungsmittel (13, 14) buchartig miteinander verbundenen Einzelgehäusen (11, 12) besteht, von denen das eine Einzelgehäuse (11) zumindest die Tastaturvorrichtung (16) und das andere Einzelgehäuse (12) zumindest die Anzeigevorrichtung (40) enthält.

2. Datenterminal nach Anspruch 1, dadurch gekennzeichnet, daß die zwischen den Einzelgehäusen (11, 12) erforderlichen mechanischen und elektrischen Verbindungsmittel (13, 14) an den beiden Endbereichen der aneinandergrenzenden Stirnseiten (22, 26) der Einzelgehäuse vorgesehen sind.

3. Datenterminal nach Anspruch 1, dadurch gekennzeichnet, daß an jedem Endbereich der aneinandergrenzenden Stirnseiten (22, 26) der Einzelgehäuse (11, 12) je ein rohrförmiger Stutzen (23, 25) vorgesehen ist und daß auf die Stutzen paarweise ein elastisch biegbarer Schlauch (34) aufgesteckt ist.

4. Datenterminal nach Anspruch 3, dadurch gekennzeichnet, daß der biegbare Schlauch als Balg (34) ausgebildet ist.

0066664

5. Datenterminal nach Anspruch 1, dadurch gekennzeichnet, daß die elektrischen Verbindungsmittel (13) aus mindestens einem hochflexiblen Kabel (35) bestehen.

6. Datenterminal nach Anspruch 1, dadurch gekennzeichnet, daß die mechanischen Verbindungsmittel aus je einem die Stutzen (23, 25) koaxial durchsetzenden und mit dem betreffenden Einzelgehäuse fest oder lösbar verbundenen Stab (30, 31) und zwei bei zusammengeklapptem Gehäuse über Kreuz liegenden und mit ihren Enden an den Stäben drehbeweglich gelagerten Stangen (32, 33) bestehen.

7. Datenterminal nach einem der Ansprüche 1 bis 6, dadurch gekennzeichnet, daß die Einzelgehäuse (11, 12) an ihren Stirnseiten einen Ein- und Ausschalter (21) und/oder eine Aufnahmeöffnung (19) für einen Kodierstecker (20) und/oder ein Schloß (46) zum Abschließen des zusammengeklappten Gehäuses aufweisen.

8. Datenterminal nach Anspruch 1 oder einem der folgenden, dadurch gekennzeichnet, daß die Anzeigevorrichtung (40) ein großflächiges Display (41), optische oder akustische Meldeelemente (43, 44; 42) sowie gegebenenfalls ein Mikrofon und/oder einen Lautsprecher umfaßt.

9. Datenterminal nach Anspruch 1, dadurch gekennzeichnet, daß die Anzeigevorrichtung (40) und/oder die Tastaturvorrichtung (16) lösbar mit dem zugehörigen Einzelgehäuse (11, 12) verbunden sind.

10. Datenterminal nach Anspruch 9, dadurch gekennzeichnet, daß die Anzeigevorrichtung (40) und/oder die Tastaturvorrichtung (16) an der Rückseite mit ersten Kontaktelementen versehen sind und daß die Einzelgehäuse (11, 12) auf den einander zugekehrten Seiten Vertiefungen enthalten, die zweite zu den ersten Kontaktelementen passende Kontaktelemente enthalten.

Fig. 1

MOBILES DATENTERMINAL

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 084 213 (MODERN CONTROLS) <br> * Spalte 2, Zeile 16 - Spalte 4, Zeile 25; Ansprüche; Abbildungen * <br> --- | 1-3,8 | G 06 F 1/00 <br> G 09 G 1/00 |
| A | DE-A-2 131 511 (SCM) <br> * Ansprüche; Abbildungen * <br> --- | 1,2,6 | |
| A | DE-A-2 038 278 (FARZAD TAGHI) <br> * Ansprüche; Abbildungen * <br> --- | 2,6 | |
| A | EP-A-0 020 866 (SIEMENS) <br> * Ansprüche; Abbildungen * <br> --- | 2,6 | |
| A | DE-A-2 328 835 (H. KRUEGER KG MASCHINENFABRIK) <br> * Abbildungen * <br> ----- | 2,6 | RECHERCHIERTE SACHGEBIETE (Int. Cl. 3) <br><br> H 05 K <br> A 47 B <br> G 12 B <br> G 09 G <br> G 06 F |

Der vorliegende Recherchenbericht wurde für alle Patentansprüche erstellt.

| Recherchenort <br> DEN HAAG | Abschlußdatum der Recherche <br> 10-08-1982 | Prüfer <br> GORUN M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82